# EUROPEAN PATENT APPLICATION

(11) **EP 0 775 652 A1**
(43) Date of publication of application: **28.05.1997**
(21) Application number: 96203286.8
(22) Date of filing: 22.11.1996
(51) Int. Cl.: B65G 53/08

(54) **System and method for transporting bulk material**

(30) Priority: 23.11.1995 CA 2163586
(71) Applicant: Dynasty TMT Corporation, Vancouver, British Columbia V6K 2V7 (CA)
(72) Inventor: Eady, Robert Frederick, Lively, Ontario P3Y 1E3 (CA)
(74) Representative: Austin, Hedley William

(57) **Abstract**

A bulk material transportation system (14) accelerates the bulk material to a selected velocity and mixes it with an airflow (18,22). When moving through the delivery pipe (26), the airflow (160) forms a laminar airflow (160) with the slower layer of the airflow (160) occurring adjacent the inner surface of the pipe (26) and the higher velocity layers (160) of the airflow occurring toward the center of the pipe (26). As the bulk material (164) moves through the pipe (26), its velocity is increased by the higher velocity layers (160) and is inhibited from making frictional contact with the inner surface of the pipe (26) by the lower speed layers (160). The bulk material (164) thus flows through the delivery pipe (26) with little contact with the interior of the delivery pipe (26).

## Description

The present invention relates to a system and method for transporting materials. More specifically, the present invention relates to a system and method for transporting bulk materials through pipes, tubes or the like.

Material transport systems are well known and have many different forms, including conveyor systems, screw drive (Archimedean screw) systems and pneumatic systems to name a few. While well known, these and other prior art systems suffer from a variety of problems. For example, conveyor systems are expensive to install, maintain and operate, especially where the material in question needs to be transported over relatively long distances. Similarly, screw drive systems are expensive to manufacture and are generally quite limited in the distance they can transport materials and are therefore often used primarily to move material from one elevation to another. Pneumatic systems are limited in the types of materials they can transport and are generally not very energy efficient.

The present invention provides a novel system and method to transport bulk materials which obviates or mitigates at least some of the disadvantages of the prior art.

According to a first aspect of the present invention, there is provided a bulk material transport system to move bulk material between a bulk material supply and a destination, comprising:
a blower assembly to provide an airflow;
a material accelerator to provide a flow of bulk material at a preselected speed from said supply of said bulk material;
an injection chamber to mix said airflow and said flow of bulk material such that said airflow has a velocity greater than said preselected speed; and
a delivery pipe extending from said injection chamber to said destination wherein said mix of said airflow and said flow of bulk material results in a laminar airflow within said delivery pipe, said laminar airflow having a greater volume than the volume of said flow of bulk material and said laminar airflow reducing frictional contact between said bulk material and the interior surface of said delivery pipe and increasing the velocity of said bulk material above said preselected speed.

Preferably, the laminar airflow increases the speed of said flow of bulk material above said preselected speed.

According to another aspect of the present invention, there is provided a transmitter for a bulk material transport system to move bulk material between a bulk material supply and a destination, comprising:
a blower assembly to supply a flow of air;
a material accelerator to accelerate bulk material from a bulk material supply to a preselected speed; and
an injection chamber to mix said flow of air and said accelerated bulk material and to provide said mixture to a delivery pipe such that said flow of air forms a laminar flow within said delivery pipe, said laminar flow having a greater volume than said accelerated bulk material and said laminar flow thereby reducing friction between said bulk material and said delivery pipe and substantially maintaining said preselected speed of said bulk material through said delivery pipe.

Preferably, the blower assembly provides the air at a pressure in the range of about 0.4 psi to about 4.0 psi. Also preferably, said preselected speed of the material is in the range from about 300 feet (150 metres) per minute to about 5,000 feet (1500 metres) per minute.

Preferably, said bulk material is in loose pieces ranging from about 2 microns in diameter on average to about three quarters of an inch (1.9cm) in diameter on average.

According to another aspect of the present invention, there is provided a method of transporting a bulk material through a delivery pipe, comprising the steps of:
(i) providing at least one flow of air;
(ii) providing a flow of bulk material from a supply of said bulk material, said flow having been accelerated to a preselected speed; and
(iii) mixing said at least one flow of air and said flow of bulk material such that said air forms a laminar flow within said delivery pipe, the volume of said laminar flow being greater than the volume of said flow of bulk material and said laminar flow reducing frictional contact between said bulk material and the interior surface of said delivery pipe and increasing the velocity of said bulk material within said delivery pipe.

An embodiment of the present invention will now be described, by way of example only, with reference to the accompanying drawings, wherein:
Figure 1 shows a pictorial representation of a transmitter in accordance with an embodiment of the present invention;
Figure 2 shows a partially cut-away view of a material accelerator for use in the transmitter of Figure 1;
Figure 3 shows a cross section of an injector chamber used in the material accelerator of Figure 2;
Figure 4 shows a view taken along line 4-4 of Figure 3;
Figure 5 shows a flow of bulk material through a portion of delivery pipe in accordance with the present invention; and
Figure 6 shows one contemplated configuration of a bulk material transportation system in accordance with the present invention.

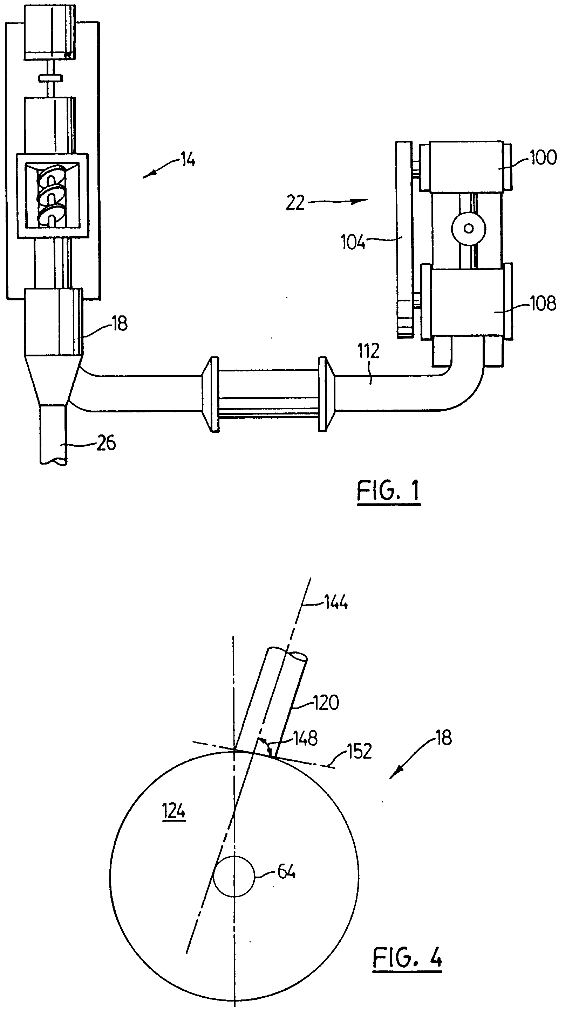

A transmitter in accordance with an embodiment of the present invention is indicated generally at 10 in Figure 1. Transmitter 10 includes a material accelerator 14; an injection chamber 18; a blower assembly 22; and a bulk material delivery pipe 26.

As used herein, the term bulk material is intended to comprise any particulate material or other material which is in the form of loose pieces and includes, without limitation: mineral ores; grains and seeds; chemical reagents; gravels; wood chips; ground glass; coal; minerals and/or gemstone bearing ore; sand; etc. Also as used herein, the terms air and airflow are intended to comprise any gas or gaseous mixture which may be supplied as a quantity of gas.

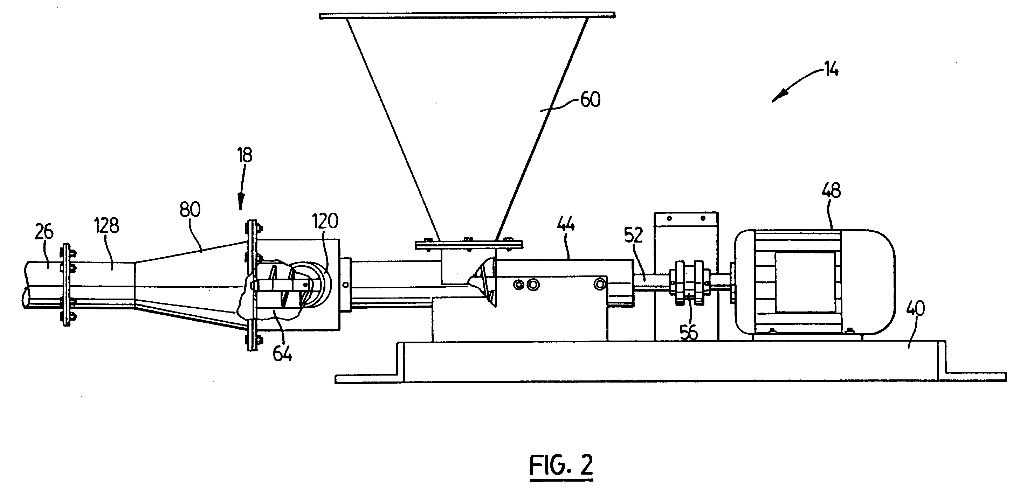

As shown more clearly in Figure 2, material accelerator 14 comprises a base 40 to which a screw drive 44 and a drive means 48 are mounted. Drive means 48 is coupled to the shaft 52 of screw drive 44 via a suitable coupler 56. Screw drive 44 can be a double or single lead screw and is fed bulk material from a feed mechanism such as hopper 60, or any other suitable feed mechanism as will occur to those of skill in the art. Whatever feed mechanism is selected, it is desired that screw drive 44 generally not be filled with bulk material when it is operating. For example, in a preferred embodiment of the present invention which employs hopper 60, the hopper opening into screw drive 44 is fitted with a plate (not shown) which limits the amount of bulk material which may enter screw drive 44. This plate, in combination with the relatively high rotational speed of screw drive 44, ensures that screw drive 44 is not filled with bulk material.

Drive means 48 is not particularly limited and can be an electric or diesel motor of suitable capacity or any other suitable prime mover as will occur to those of skill in the art. As drive means 48 rotates shaft 52, bulk material is accelerated by screw drive 44 and exits the barrel 64 of screw drive 44 at the inlet to mixing cone 80 of injection chamber 18.

The pitch and rotational speed of screw drive 44 are selected to provide the desired quantity of material to injection chamber 18. It is contemplated that rotation speeds of, for example 1200 to 3600 rpm, may be selected as required accommodate various bulk materials and transport rates. Also, depending upon the diameter of barrel 64, the bulk material may be delivered at a range of linear speeds of from about 500 feet (150 metres) per minute to 5,000 feet (1500 metres) per minute.

As shown in Figure 1, blower assembly 22 comprises a drive means 100 which is coupled via a belt drive 104 to a blower unit 108. In the presently preferred embodiment, blower unit 108 is a positive displacement blower, such as those manufactured by Roots, Hibbon, Spencer, Leybold or Sutorbilt and may be a horizontal or vertical discharge unit. In this embodiment, blower assembly 22 supplies atmospheric air to injection chamber 18, but blower assembly 22 can be modified in a manner which will be apparent to those of skill in the art to deliver other gases or gaseous mixtures. Drive means 100 is also not particularly limited and can be a prime mover of any suitable capacity as would occur to those of skill in the art. In particular, it is contemplated that in some circumstances drive means 48 can also act as drive means 100.

Depending upon the characteristics of the bulk material to be delivered, blower assembly 22 delivers air pressurized within a range of from about 0.4 psi to about 4.0 psi, as measured at the discharge of blower assembly, to injection chamber 18. It is contemplated however, that higher or lower pressures may be desired in some circumstances.

Depending upon the desired velocity of the bulk material and the diameter of delivery pipe 26, blower assembly 22 delivers a volume of air in the range from about 200 cfm to about 10,000 cfm to injection chamber 18. Generally, it is desired that the volume of air be selected to ensure that the speed of the airflow through injection chamber 18 is higher than the speed at which the bulk material is delivered thereto. Air from blower assembly 22 is delivered to injector chamber 18 via an air feed pipe 112.

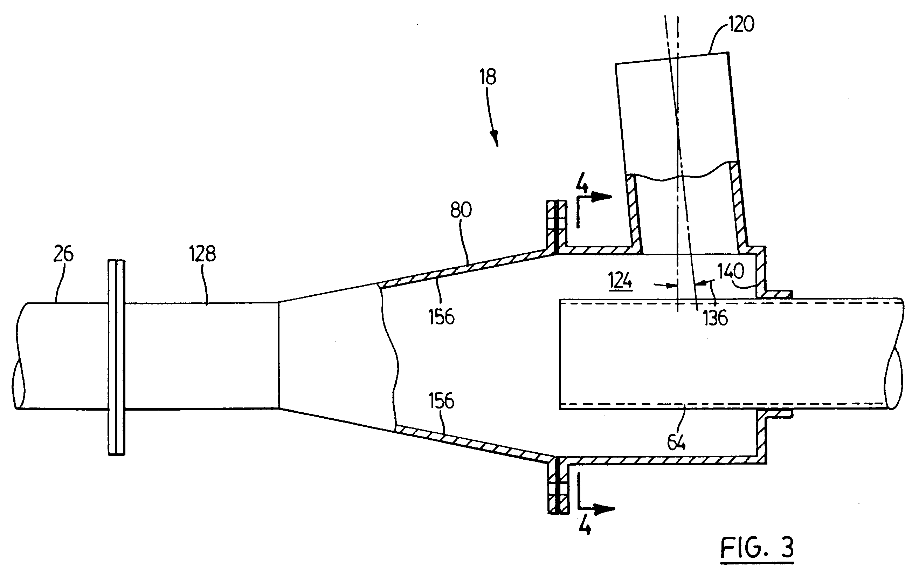

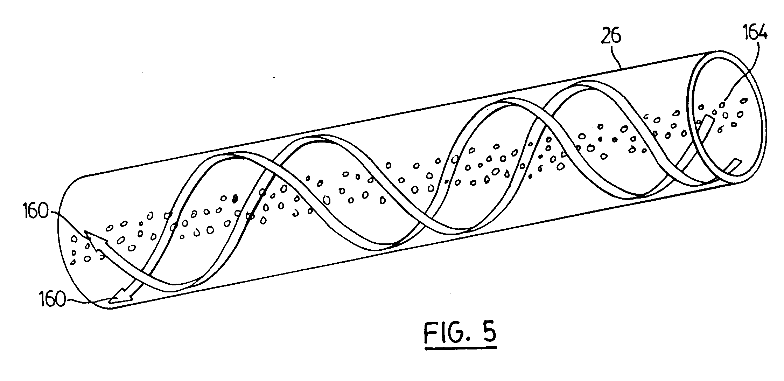

Referring now to Figures 3 and 4, injection chamber 18 is shown in more detail. As is shown, injection chamber 18 includes at least one air inlet 120, an air swirl chamber 124 and the above-mentioned mixing cone 80 which terminates in a throat 128 to which delivery pipe 26 can be attached. Barrel 64 may be moved horizontally, with respect to mixing cone 80, to accommodate different bulk material speeds and/or different air speeds as will be discussed in more detail below.

As shown in Figure 3, air inlet 120 is arranged such that the air supplied from blower assembly 22 enters air swirl chamber 124 at an angle 136 from a plane taken perpendicular to the longitudinal axis of injection chamber 18, of about 5 degrees, such that the airflow will strike the back wall 140 of air swirl chamber 124. Also, as shown in Figure 4, air inlet 120 is arranged such that the center of the airflow entering air swirl chamber 124 from air inlet 120 is off centre from the centre of air swirl chamber 124 by a preselected amount. Specifically, in a presently preferred embodiment of the invention, air inlet 120 is arranged such that a centreline 144 through air inlet 120 is at an angle 148, with respect to a tangent 152 taken at the intersection between the outer diameter of air swirl chamber 124 and center line 144, of about 87 degrees.

As will be understood by those of skill in the art, the above-described arrangement of air inlet 120 with respect to air swirl chamber 124 results in the air which is introduced into air swirl chamber 124 via air inlet 120 forming a spiral flow pattern about air swirl chamber 124. In the presently preferred embodiment, screw drive 44 has a right hand thread and the spiral flow pattern formed in air swirl chamber 124 is a corresponding right hand helix. It will be apparent to those of skill in the art that corresponding left hand threads and left hand spiral flow patterns may also be employed, if desired.

It is contemplated that while corresponding thread and spiral flow patterns will typically be preferred, in some circumstances the laminar airflow through delivery pipe 26 need not be helical and that a substantially linear laminar airflow will be sufficient in which case either a right or left handed thread may be employed on screw drive 44.

As indicated in Figure 3, mixing cone 80 tapers from its inlet, adjacent air swirl chamber 124, to throat 128. Specifically, in the presently preferred embodiment, the angle 156 between the walls of mixing cone 80 is a constant of about 22 degrees. As will be apparent to those of skill in the art, the length of mixing cone 80 is therefore determined by the diameter of air swirl chamber 124 and the diameter of throat 128, the latter being selected to be the same size as delivery pipe 26.

The construction of delivery pipe 26 is not particularly limited and for many bulk materials, PVC, thin wail steel or other pipe may be employed as desired. It is however contemplated that pipes fabricated from other materials, such as stainless steel, may be required for some applications. However delivery pipe 26 is fabricated, it is desired that its interior surface be substantially free from imperfections which would disrupt the laminar nature of the airflow therein. For example, joints between adjacent sections of pipe and joints at bends preferably have smooth bevelled interiors. Similarly, dents, slag, welds etc. should be removed from the interior of delivery pipe 26.

In operation, air from blower assembly 22 enters air swirl chamber 124 and forms a helical flow pattern with the longitudinal axis of the helical flow being substantially aligned with the longitudinal axes of mixing chamber 80 and throat 128. As will be apparent, the open cross sectional area of air swirl chamber 124 and/or mixing chamber 80 increases when barrel 64 terminates. As this increase in the cross sectional area would result in an undesired decrease in the velocity of the helical airflow, inhibiting the formation of a laminar flow, the rate of delivery of bulk material from barrel 64 is selected such that the volume of the bulk material sufficiently reduces the open cross sectional area to inhibit the decrease in the velocity of the helical airflow.

As the helical airflow and the bulk material enters mixing cone 80, the speed of the airflow, both the forward speed and the rotational speed, is increased due to the decreasing cross sectional diameter of mixing cone 80. Therefore, the helical airflow acquires a laminar helical flow pattern through mixing cone 80 and throat 128 and this flow pattern is maintained into delivery pipe 26 as shown in Figure 5 wherein the airflow is indicated by arrows 160.

As is discussed below, the volume and pressure of the air entering air inlet 120 can be adjusted, as can the amount and the velocity of the bulk material exiting barrel 64. As a further possible adjustment to maintain the desired airflow pattern and mixing, barrel 64 may be moved horizontally into mixing chamber 80, as described above. As will be apparent, when barrel 64 is moved into mixing chamber 80, the cross sectional area of mixing chamber 80 is decreased, raising the velocity of the airflow and decreasing its pressure.

The bulk material which exits barrel 64 of screw drive 44 at its preselected speed traverses mixing cone 80 and enters throat 128 and delivery pipe 26 in turn. In throat 128 and delivery pipe 26, laminar airflow 160 has its lowest velocity adjacent the inner surface of delivery pipe 26 and its highest velocity at the center of delivery pipe 26. Therefore, the bulk material is inhibited from making frictional contact with the inner surface of delivery pipe 26 by the above-mentioned relatively low speed layer of laminar airflow 160 and the velocity of the bulk material is increased by the above-mentioned relatively high velocity layers of laminar airflow 160. In this manner, the bulk material identified in Figure 5 with reference numeral 164, is transported through delivery pipe 26 at a desired speed.

It has been found that various bends may be included in delivery pipe 26 provided that the radius of curvature of the bends is sufficiently large. For example, it has been found that a radius of curvature of 60 inches (1.5m) or more does not unduly inhibit transport of bulk material 164 when delivery pipe 26 has a diameter of three inches (7.6cm). It is contemplated that the desired minimum radius of curvature for bends in delivery pipe 26 will depend upon the forward speed of bulk material 164, the weight of the particles making up bulk material 164 and the diameter of delivery pipe and the desired delivery distance. It has also been found that changes in elevation can be accommodated and runs of vertical or near vertical sections of delivery pipe 26 can be accommodated.

In the embodiment shown in Figures 1 through 4, a single air inlet 120 is employed which results in an airflow 160 with a relatively high rotational speed relative to its forward speed. As will be apparent to those of skill in the art, this arrangement results in a centrifugal force being applied to bulk material 164 by the higher speed layers of laminar airflow 160 such that the bulk material 164 is separated or classified while it is being transported. In other contemplated embodiments, two or more air inlets 120 may be employed. The present inventor has found that by providing two air inlets 120, spaced around the diameter of air swirl chamber 124, the resulting airflow 160 has a reduced rotational speed relative to its forward speed, resulting in bulk material 164 moving in a relatively linear manner through delivery pipe 26.

The desired velocity of the airflow through injection chamber 18, which is related to the volume of air and bulk material supplied, must be properly adjusted for proper operation of the transport system. The present inventor has determined that proper adjustment can be determined empirically. Specifically, if too little volume is provided, the velocity will be too low and bulk material will collect in delivery pipe 26 (referred to by the present inventor as "bogging"). The bulk material will collect until the flow of the air through delivery pipe 26 is sufficiently impeded that the airflow will 'blow' the bulk material along the delivery pipe (referred to by the present inventor as "surging"). To prevent/overcome bogging and surging, the volume (and hence velocity) of the supplied airflow is increased. If too great a volume of air is present, back pressure will increase and some of the airflow will "blow back" through screw drive 44 and vent through hopper 60. To avoid this, the volume of the supplied air and/or the flow bulk material is decreased appropriately. Between these two extremes, the volume is adjusted to obtain the desired bulk material flow characteristics at the destination end of delivery pipe 26 with increases in volume/velocity of the airflow resulting in higher transport speeds.

Another consideration which is useful in operating a transport system in accordance with the present invention is the relative volumes of air and bulk material within delivery pipe 26. Generally, a ratio of air volume to bulk material volume of from about 60 to 1 to about 80 to 1 is desired. However, it has been determined that higher ratios may also be advantageously employed in some circumstances such as when separation and/or classification is desired of the bulk material in transit.

An additional adjustment, as mentioned above, may be effected by moving barrel 64 into or out of mixing cone 80 to further alter the velocity of the airflow. This adjustment allows the velocity of the airflow to be altered within mixing cone 80 such that a reduced pressure is created adjacent the outlet of barrel 64. This condition is generally desired when relatively fine and lightweight material, such as flour for example, is being transported. Such materials are particularly susceptible to blow back through barrel 64 and the creation of a reduced pressure adjacent the outlet of barrel 64 serves to inhibit such blow back from occurring.

The present inventor has determined that a velocity of airflow through delivery pipe 26 about 4500 fpm is often a reasonable initial condition for a transport system in accordance with the present invention. For a delivery pipe 26 with a three inch (7.6cm) inner diameter (ID), with approximately 0.049 square feet (45.5cm² of cross section, a volume of about 220 cubic feet per minute (cfm) 6.2m² per minute results in approximately this velocity and, in tests, has been found to accommodate a flow of bulk material of about 3.5 cfm (0.1m² per minute). Similarly for a delivery pipe 26 with a four inch (10.2cm) ID, giving a cross-sectional area of about 0.087 square feet (81cm²), a volume of about 400 cfm results in approximately this velocity and, in tests, has been found to accommodate a flow of bulk material of approximately 5.0 cfm (0.14m² per minute). A volume of 900 cfm provides this velocity for a delivery pipe with a six inch (15.2cm) ID, and a cross sectional area of about 0.196 square feet (182cm²), and in tests, this embodiment has been found to accommodate a flow of bulk material of about 5 cfm (0.14m² per minute).

Preferably, operation of a transport system in accordance with the present invention is commenced by first starting blower assembly 22 and, once an appropriate airflow is established, then starting material accelerator 14. Depending upon the characteristics of the material to be transported, the position of barrel 64 with respect to mixing cone 80 may be altered as material accelerator 14 is started and the desired flow of bulk material is established. To shut down a transport system in accordance with the present invention, material accelerator 14 is deactivated first and blower assembly 22 is shut down after bulk material 164 has been substantially evacuated from delivery pipe 26.

In one test of the present invention, nickel copper fines were transported one hundred and fifty feet (47m) through a delivery pipe formed of sections of three inch (7.6cm) (ID) PVC schedule 40 pipe and bends formed of wire wound three inch (7.6cm) (ID) flex hose, the bends having sixty inch (1.5m) radii of curvature. The fines had a range of particle sizes of from about 100 mesh to about ³/₈ of an inch (0.95cm) and screw drive 44 was a double lead one inch (2.5cm) screw which was rotated at approximately 1800 rpm to deliver about 0.8 cfm of material. To this, about 213 cfm (6.0m² per minute) of air was mixed in injection chamber 18 and a transport rate of about 4 tonnes per hour was obtained at a delivery velocity of about 4350 fpm (1.33km per minute). Drive means 48 was a 5 HP electric motor, as was drive means 100.

In another test of the present invention, metallurgical coke was transported six hundred and forty five feet (197m), including a vertical rise of about one hundred and twenty feet (37m), through a three inch (7.6cm) (ID) 10 gauge ASTM delivery pipe. Delivery pipe 26 included a 25 foot (7.6m) run adjacent the transmitter which led through a 90 degree bend to a vertical run of 120 feet (37m) and then through a further 90 degree bend into a substantially horizontal run of about 500 feet (152m) which also included various bends. In this test, the range of particle sizes was from about 65 mesh to about 0.125 inch (0.32cm) and screw drive 44, which had a double lead one inch auger, was set to deliver about 3.6 cfm of material (this is higher than the previous test as the coke had a lower density relative to the above-described nickel copper fines). This material was mixed with about 210 cfm of air in injection chamber 18 and a transport of about 3.25 tonnes per hour was achieved with a material delivery velocity of about 4290 fpm (1.3km per minute). Again, in this test both drive means 48 and drive means 100 were 5 HP electric motors.

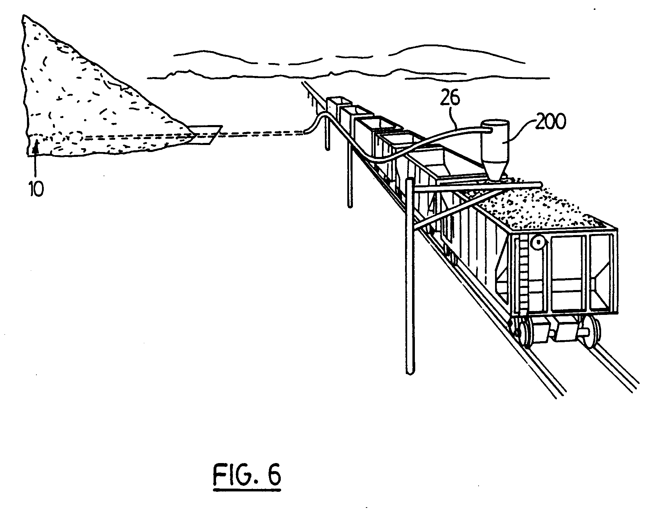

Figure 6 shows a representation of a system similar to the above-described test systems which can be used to load ore into railcars. In this system, the destination end of delivery pipe 26 terminates in a pole mounted cyclone 200 which is used to reduce the delivered velocity of the ore to a level which is acceptable for placing into the railcar. For other configurations, cyclone 200 may be replaced with one or more baffle plates or similar velocity dissipating devices, or may not be necessary at all.

Various enhancements and/or optional capabilities are also contemplated. For example, the air supplied from blower unit 22 may be heated so that bulk material 164 is heated and/or dried during transportation. Further, this allows hot bulk material 164 to be transported without substantial heat loss as heated airflow 160 will replace heat otherwise lost from bulk material 164 and will inhibit the transfer of the heat energy of bulk material 164 to delivery pipe 26 as bulk material 164 is generally inhibited from touching delivery pipe 26.

If a wet bulk material to be dried during transportation has a relatively small particle size and/or weight, flights may be added to the end of barrel 64 to promote radial scattering of the bulk material into the airflow in mixing chamber 80 to enhance the drying of the bulk material.

Conversely, the air can be humidified if it is desired to add moisture to bulk material 164 during transport. This configuration can also serve to reduce the buildup of a static electric charge in bulk material 164. As mentioned above, it is also contemplated that the air supplied from blower unit 22 need not be air at all. For example, it may be desired in some circumstances to employ an chemically inert gas to prevent undesired reactions during transport or to employ a reactant gas so that a chemical reaction occurs during transportation.

It is also contemplated that materials capable of being airborne can be introduced through one or more of the airflows for mixing purposes. For example, a seed coating material may be introduced when bulk material 164 comprises grain or seeds, bulk material 164 receiving a desired coating of the airborne material during transportation.

The above-described embodiments are intended to be examples of the present invention and alterations and modifications may be effected thereto, by those of skill in the art, without departing from the scope of the invention which is defined solely by the claims appended hereto.

## Claims

1. A bulk material transport system to move bulk material between a bulk material supply and a destination, comprising:
a blower assembly to provide a airflow;
a material accelerator to provide a flow of bulk material at a preselected speed from said supply of said bulk material;
an injection chamber to mix said airflow and said flow of bulk material such that said airflow has a velocity greater than said preselected speed; and
a delivery pipe extending from said injection chamber to said destination wherein said mix of said airflow and said flow of bulk material results in a laminar airflow within said delivery pipe, said laminar airflow having a greater volume than the volume of said flow of bulk material and said laminar airflow reducing frictional contact between said bulk material and the interior surface of said delivery pipe and increasing the velocity of said bulk material above said preselected speed.

2. A bulk material transport system according to claim 1, wherein said material accelerator comprises a screw drive.

3. A bulk material transport system according to claim 1 or 2, wherein said injection chamber comprises an air swirl chamber to establish a helical flow of said air and a mixing chamber wherein said helical flow of air forms a laminar flow about said flow of bulk material.

4. A transmitter for a bulk material transport system to move bulk material between a bulk material supply and a destination, comprising:
a blower assembly to supply a flow of air;
a material accelerator to accelerate bulk material from a bulk material supply to a preselected speed; and
an injection chamber to mix said flow of air and said accelerated bulk material and to provide said mixture to a delivery pipe such that said flow of air forms a laminar flow within said delivery pipe, said laminar flow having a greater volume than said accelerated bulk material and said laminar flow thereby reducing friction between said bulk material and said delivery pipe and substantially maintaining said preselected speed of said bulk material through said delivery pipe.

5. A transmitter according to claim 4, wherein said material accelerator comprises a screw drive.

6. A transmitter according to claim 4 or 5, wherein said injection chamber comprises an air swirl chamber to establish a helical flow of said air and a mixing chamber wherein said helical flow of air forms a laminar flow about said flow of bulk material.

7. A transmitter according to claim 4 or 5, wherein said injection chamber further includes means to introduce an airborne material for mixing with said bulk material during transport within said delivery pipe.

8. A method of transporting a bulk material through a delivery pipe, comprising the steps of:
(i) providing at least one flow of air;
(ii) providing a flow of bulk material from a supply of said bulk material, said flow having been accelerated to a preselected speed; and
(iii) mixing said at least one flow of air and said flow of bulk material such that said air forms a laminar flow within said delivery pipe, the volume of said laminar flow being greater than the volume of said flow of bulk material and said laminar flow reducing frictional contact between said bulk material and the interior surface of said delivery pipe and increasing the velocity of said bulk material within said delivery pipe.

9. A method according to claim 8, wherein the ratio of said laminar flow to said volume of said flow of bulk material is at least about 60 to 1.

10. A method according to claim 8, wherein the pressure of said flow of air is in the range of from about 0.4 psi to about 4.0 psi.
